# EUROPEAN PATENT APPLICATION

(11) **EP 4 389 927 A1**
(43) Date of publication of application: **26.06.2024**
(21) Application number: 22215098.9
(22) Date of filing: 20.12.2022
(51) Int. Cl.: C22C 38/54, C22C 38/44, C22C 38/48, C22C 38/52, C22C 38/34, C22C 38/04, C22C 38/00, C22C 38/32, C22C 38/22, C22C 38/26, B22F 9/08, C22C 33/02, C23C 4/08

(54) **NOVEL IRON-CHROMIUM BASED ALLOYS FOR LASER CLADDING**

(71) Applicant: Höganäs AB (publ), 263 83 Höganäs (SE)
(72) Inventor: Maroli, Barbara, 26332 Höganäs (SE); Frykholm, Robert, 254 73 Ödåkra (SE); Memarpour, Arashk, 25450 Helsingborg (SE)
(74) Representative: Blurock, Maryna

(57) **Abstract**

For providing laser cladded surfaces with low cracking risk in the laser cladded surface, whether macro or micro cracking, an iron-chromium based alloy is provided, consisting of by weight of total weight of alloy:

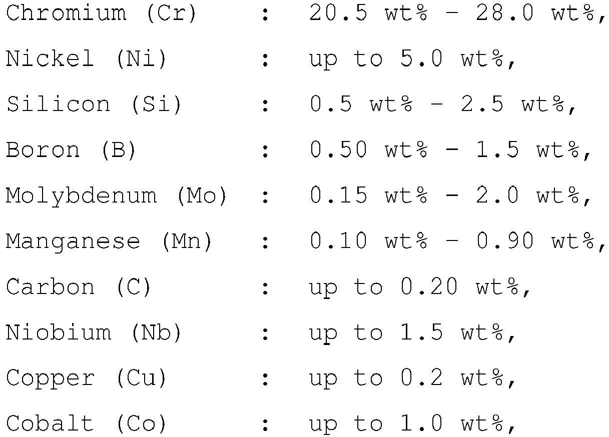

the balance being iron (Fe) and unavoidable impurities not exceeding 0.5 wt%.

## Description

### TECHNICAL FIELD

Within the field of iron-chromium based alloys there are disclosed a range of novel iron-chromium based alloys which are suitable for laser cladding with minimal crack formation during the laser cladding process.

### BACKGROUND

In recent years, laser cladding has to a large extent replaced hard chromium plating of wear parts exposed to saline environments, such as e.g., in the mining industry, e.g., for piston rods for hydraulic roof supports, as such laser cladded wear parts may have their lifetime increased by up to five times using laser cladding over the previous hard chromium plating. E.g., laser cladding using Rockit^{®} 401 from Höganäs AB has been used in the coal mining industry during the last ten years to coat piston rods for hydraulic roof supports, as in the industry, Rockit^{®} 401 (Fe-18Cr-2.5Ni-0.5Mo-0.15C) is the current market leading alloy for laser cladding, both globally and particularly in the APAC-region.

At present only large piston rods, most part having a diameter of 300mm and a length of 1300mm, are laser cladded. This represents roughly 15-20% of the piston's rods, including new production and refurbishment. The remaining 85% are hard chromium plated due to cost and technical issues with laser cladding wear parts, such as piston rods, with small diameters due to too high heat input of the current laser cladding process. However, due to the benefits to lifetime and others, the future goal for the OEMs is to laser clad 100% of the produced wear parts such as piston rods.

Also, there is a pull from OEMs to reduce the coating costs by increasing productivity e.g., using higher clad speeds and new types of nozzles, reducing the coating thicknesses, and/or minimizing post welding processes e.g., machining. Currently, industrial standard coating thicknesses after deposition are on the order of 1.2 mm, but the industry goal is to decrease this to below 0.8 mm, preferably to below 0.5 mm or even below 0.3 mm. These further requirements pose new demands on the on the alloys and the powder particle sizes used in the laser cladding processes, as higher clad speed and lower coating thickness result in higher cooling rates of the coating material, and potentially higher internal stresses, and further influences the alloy welding behavior, the final coating microstructure etc.

For increasing the clad speed while at the same time reducing the coating thickness, it is necessary to use smaller coating particles during the laser cladding process compared to processes where thicker coatings are desired, as smaller particles melt faster. In the art, a working range for the particle size distribution for laser cladding can be from 10 µm to 150 µm, however high-speed laser cladding requires particle size distributions which are more narrowly defined, and current industry target distributions range aim at finding the particle size distributions in the range of from 10 µm to 110 µm.

Unfortunately, current iron-chromium alloys falling in the desired size distribution range, were found unsatisfactory when attempting to produce smaller coatings than previously marketed, as increased cooling rate was found to lead to crack formation and an unstable microstructure. Additionally, that resulting hardness when cladding using existing powders on the market show unsatisfactory scatter in hardness/wear resistance and corrosion of the coatings.

The present invention therefore is motivated by this current need for new robust alloys suitable for high speed/high productivity laser cladding processes, which can be used to produce thin (<0.3mm) crack free coatings with stable microstructure, hardness in the range of 400-550 Vickers, while having the same corrosion resistance and machinability as the best protective iron-chromium alloys for laser cladding, such as e.g., Rockit^{®} 401.

In the field of the present invention, alloy powders for laser cladding repair of a mining hydraulic stand column are e.g., known from CN113046625, the alloy comprising 15-17 wt% Cr, 1.5-2.0 wt% Ni, 1.5-2.0 wt% Co, 0.8-1.2 wt% Mo, 0.0-0.4 wt% Mn, 0.1-0.2 wt% Nb, 0.07-0.14 wt% C, 0.06-0.12 wt% N, 0.03-0.06 wt% Ce, 0.6-1.0 wt% B, 0.8-1.2 wt% Si, with the balance being Fe. However, the high content of cobalt results in health and safety issues for operators using the alloy powders of the prior art requiring special precautions and avoiding cobalt above a level of unintentional inclusions is a further aim of the present disclosure and attained by the present alloys.

### DETAILED DESCRIPTION

In accordance with the present disclosure and invention, the objectives of the present disclosure are solved by providing in a first aspect and embodiment thereof an iron-chromium based alloy consisting of by weight of total weight of alloy:

| | |
|---|---|
| Chromium (Cr) | : 20.5 wt% - 28.0 wt%, |
| Nickel (Ni) | : up to 5.0 wt%, |
| Silicon (Si) | : 0.5 wt% - 2.5 wt%, |
| Boron (B) | : 0.50 wt% - 1.5 wt%, |
| Molybdenum (Mo) | : 0.15 wt% - 2.0 wt%, |
| Manganese (Mn) | : 0.10 wt% - 0.90 wt%, |
| Carbon (C) | : up to 0.20 wt%, |
| Niobium (Nb) | : up to 1.5 wt%, |
| Copper (Cu) | : up to 0.2 wt%, |
| Cobalt (Co) | : up to 1.0 wt%, |

the balance being iron (Fe) and unavoidable impurities not exceeding 0.8 wt%.

Surprisingly it was found by the present inventors that laser cladded coatings based on the presently disclosed alloys could be produced on laboratory scale having thicknesses between 100 to 350 µm using clad speeds between 30 and 100 m/min and deposition rates between 0.5 to 1.5 m²/h. The coatings of the present alloys as produced were free from cold cracks and showed a hardness between 400-450 HV; and a corrosion resistance in NSS >> 96h.

Chromium (Cr) with iron form the bulk part of the present alloys, with chromium being the main responsible component for the corrosion protection, with other elements disclosed herein contributing primarily to the properties of powders of the present alloys for use in laser cladding. Advantageously, the working range for chromium when adjusted with other elements in accordance with the present disclosure is rather broad, from 20.5 wt% to 28.0 wt% of chromium in the alloys. However, optimum performance for chromium was found between 23 wt% to 24 wt% of chromium with performance increasing from the aforementioned limits towards this observed optimal concentration interval. Accordingly, in embodiments of the present alloys, there is herein detailed an iron-chromium based alloy, wherein chromium (Cr) is present from 21 wt% to 27 wt%, from 21.5 wt% to 26 wt%, from 22 wt% to 25 wt%, from 22.5 wt% to 24.5 wt%, preferably from 23 wt% to 24 wt%, more preferably from 23.2 wt% to 23.8 wt% or from 23.4 wt% to 23.6 wt%.

Nickel (Ni), alongside chromium, was found useful in corrosion prevention when preparing laser cladded surfaces using the present alloys. However, when the nickel concentration was raised above 5 wt%, the desired surface hardness would suffer, limiting the nickel content upwards thereby. However, compared to chromium, nickel is an expensive additive, and accordingly, it is desirable to keep the nickel content as low as possible. In experiments it was found that nickel could be absent or present only to a level of an unavoidable impurity, however optimal results were found when nickel was present from 1 wt% and up. In embodiments of the present alloys therefore, there is herein detailed an iron-chromium based alloy, wherein nickel (Ni) is present from 1 wt% to 5 wt%, from 1.5 wt% to 4.5 wt%, from 2.0 wt% to 4.0 wt%, from 2.15 wt% to 3.85 wt%, from 2.25 wt% to 3.75 wt%, from 2.35 wt% to 3.65 wt%, from 2.50 wt% to 3.50 wt%, from 2.65 wt% to 3.35 wt%, or preferably from 2.75 wt% to 3.25 wt%.

In the experiments it was further found that the main impurity present in the alloys was oxygen (O) due to the high content of chromium, when working from starting materials otherwise low in residual contaminants. Generally, it was found that oxygen as the major unavoidable impurity would be introduced during atomization, particularly during water atomization, the concentration of oxygen in the laboratory experiments not exceeding 0.3 wt% based on the total mass of the alloys, but in initial experiments under production conditions, oxygen was found up to 0.6 wt% based on the total mass of the alloys. Accordingly, in embodiments of the present invention, oxygen (O) as an unavoidable impurity can be present up to 0.6 wt%, but preferably is present to a lower extent, such as preferably up to 0.55 wt%, up to 0.5 wt%, up to 0.45 wt%, up to 0.4 wt%, up to 0.35 wt%, or more preferably up to 0.3 wt% or lower.

In embodiments of the present disclosure, copper (Cu) can be present in the alloys of the present disclosure. As the presence of copper in the present alloys was found in general to be detrimental to the avoidance of crack formation during laser cladding, copper cannot be present in amounts exceeding 0.2 wt% Cu. Accordingly in embodiments of the present disclosure there is herein detailed, an iron-chromium based alloy, wherein copper (Cu) is present up to 0.1 wt%, preferably wherein copper is present as an unavoidable impurity.

In the experiments it was found possible to use up to 1.0 wt% cobalt (Co) as an uninfluencing filler into the present alloys. However, for health and safety reasons in laser cladding processes and when handling iron-powders containing cobalt, the present alloys preferably do not rely on cobalt for their properties. In preferred embodiments of the present alloys therefore, there is herein detailed an iron-chromium based alloy, wherein cobalt (Co) is present up to 0.2 wt%, preferably up to 0.1 wt%, more preferably wherein cobalt is present as an unavoidable impurity.

In the experiments it was found that niobium (Nb) beneficially reduces crack formation during laser cladding whenever present, and that for high concentrations of boron (B) and/or carbon (C), niobium is a necessary additive for crack-prevention during laser cladding. And while niobium consequently may be absent from the present alloys, or only present as an unavoidable impurity, in embodiments of the present alloys, there is herein detailed an iron-chromium based alloy, wherein niobium (Nb) is present from 0.30 wt%, from 0.35 wt%, from 0.40 wt%, from 0.45 wt%, from 0.5 wt%, from 0.55 wt%, from 0.60 wt%, from 0.70 wt%, from 0.8 wt%, from 0.9 wt%, or from 1.0 wt%, to 1.4 wt%, to 1.3 wt%, to 1.2 wt%, to 1.1 wt%, to 1.0 wt%, to 0.9 wt%, or to 0.8 wt%, preferably from 0.40 to 1.2 wt%, from 0.45 wt% to 1.1 wt% or from 0.50 wt% to 1.0 wt%.

In an embodiment thereof, there is herein detailed an iron-chromium based alloy, wherein if one of either the content of carbon (C) exceeds 0.15 wt%, the content of boron (B) exceeds 1.1 wt%, or the combined content of carbon and boron exceeds 1.20 wt%, niobium (Nb) is present from 0.30 wt% to 1.5 wt%, preferably from 0.5 wt% to 1 wt%.

The elements silicon (Si), boron (B), molybdenum (Mo), manganese (Mn), and carbon (C) are mandatorily present in the alloys of the present disclosure, their presence having been found necessary for providing the necessary adjustment to the laser cladding or corrosion resistance properties of iron, chromium and, if present, nickel. From the experiments, certain optimal concentrations for the abovementioned elements could be derived, as detailed herein below.

It was found that silicon (Si) necessarily shall be present from 0.5 wt% to 2.5 wt% in the alloys of the present disclosure. However, in embodiments of the present alloys, there is herein detailed iron-chromium based alloys, wherein silicon (Si) is present from 0.75 wt% to 2.45 wt%, from 1.0 wt% to 2.4 wt%, from 1.25 wt% to 2.35 wt%, from 1.5 wt% to 2.3 wt%, from 1.6 wt% to 2.25 wt%, preferably from 1.7 wt% to 2.2 wt%, from 1.8 wt% to 2.15 wt%, or more preferably from 1.9 wt% to 2.1 wt%.

It was found that boron (B) necessarily shall be present from 0.5 wt% to 1.5 wt% in the alloys of the present disclosure. However, in embodiments of the present alloys, there is herein detailed an iron-chromium based alloy, wherein boron (B) is present from 0.6 to 1.4 wt%, from 0.7 wt% to 1.3 wt%, from 0.8 wt% to 1.2 wt%, from 0.9 wt% to 1.1 wt%, or preferably from 0.95 wt% to 1.05 wt%.

It was found that molybdenum (Mo) necessarily shall be present from 0.15 wt% to 2.0 wt% in the alloys of the present disclosure. However, in embodiments of the present alloys, there is herein detailed an iron-chromium based alloy, wherein molybdenum (Mo) is present up to 1.9 wt%, up to 1.8 wt%, up to 1.7 wt%, up to 1.6 wt%, up to 1.5 wt%, up to 1.4 wt%, up to 1.3 wt%, up to 1.2 wt%, up to 1.1 wt%, up to 1.0 wt%, up to 0.90 wt%, up to 0.80 wt%, preferably up to 0.70 wt%, up to 0.60 wt%, up, or more preferably up to 0.50 wt%.

In an embodiment thereof, there is herein detailed an iron-chromium based alloy, wherein molybdenum (Mo) is present from 0.20 wt%, from 0.25 wt%, from 0.30 wt%, from 0.35 wt%, from 0.40 wt%, from 0.45 wt%, from 0.50 wt%, from 0.55 wt%, from 0.60 wt%, from 0.65 wt% or from 0.70 wt%.

In an embodiment thereof, there is herein detailed an iron-chromium based alloy, wherein molybdenum (Mo) is present from 0.20 wt% to 1.3 wt%, from 0.25 wt% to 1.1 wt%, from 0.3 wt% to 0.90 wt%, from 0.35 wt% to 0.70 wt%, or from 0.40 wt% to 0.60 wt%.

It was found that manganese (Mn) necessarily shall be present from 0.1 wt% to 0.9 wt% in the alloys of the present disclosure. However, in embodiments of the present alloys, there is herein detailed an iron-chromium based alloy, wherein manganese (Mn) is present from 0.2 wt%, from 0.3 wt%, from 0.35 wt%, from 0.40 wt%, from 0.45 wt%, or from 0.50 wt%; and to 0.85 wt%, to 0.80 wt%, to 0.75 wt%, to 0.70 wt%, to 0.65 wt%, to 0.60 wt%, to 0.55 wt% or to 0.50 wt%, preferably from 0.30 wt% to 0.70 wt% or from 0.40 wt% to 0.60 wt%.

It was found that the presence of carbon (C) in the alloys of the present disclosure is necessary for obtaining appropriate hardness of the laser cladded coatings in combination with boron as herein detailed. However, carbon being a light element was observed to reach effective molecular amounts already at concentrations by weight which otherwise in the current context is at the level of unavoidable impurities of carbon contained in the raw materials. For optimal results, however, carbon shall be present from 0.01 wt% to 0.20 wt% in the alloys of the present disclosure, preferably carbon (C) is present from 0.02 wt%, from 0.03 wt%, from 0.04 wt%, from 0.05 wt%, from 0.06 wt%, from 0.07 wt%, from 0.08 wt%, from 0.09 wt%, from 0.10 wt%; and to 0.19 wt%, to 0.18 wt%, to 0.17 wt%, to 0.15 wt%, to 0.14 wt%, to 0.13 wt%, to 0.12 wt%, to 0.11 wt% or to 0.10 wt%, preferably from 0.05 wt% to 0.15 wt%.

In an embodiment thereof, there is herein detailed an iron-chromium based alloy on powder form.

In an embodiment thereof, there is herein detailed an iron-chromium based alloy on powder form, wherein oxygen (O) as an unavoidable impurity does not exceed 0.6 wt% by weight of total weight of alloyed powder.

### EXAMPLES

### Example 1 - Manufacture of alloys and impurities contained:

In accordance with the present disclosure and invention, the following iron-chromium alloys on powder form were tested for their suitability for solving the objectives of the present disclosure, c.f. Tables 1 and 2.

Alloys according to Table 1 were produced by joint melting of the constituents in a test scale of approximately 10 kg furnace. Some of the tests were repeated in a large scale 200 kg furnace. Alloys on powder form as reported in Table 1 for testing in laser cladding experiments were subsequently atomized using one of either gas atomization (GA), water atomization (WA), or high-pressure water atomization (HPWA).

Impurities found in the raw materials include Cu, Co, Al, S, and P.

In experiments not reported herein, it was found that when copper (Cu) exceeds 0.2 wt% of the iron-chromium based alloy, solidification cracks in the laser clad surfaces start to form. Hence, in the present alloys, if copper (Cu) is present, the content of copper shall not exceed 0.2 wt%, preferably shall not exceed 0.1 wt% based on the total weight of the alloy. Most preferred however, copper is present only as an unavoidable impurity. In the experiments reported herein, copper (Cu) is essentially absent, i.e., below the analytical detection limit.

In experiments not reported herein, it was found that cobalt (Co) can be present up to 1.0 wt% of the iron-chromium based alloy without affecting the properties of laser clad surfaces coated with the alloys of the present disclosure. Accordingly, inclusion of cobalt (Co) up to 1.0 wt% in the alloys of the present disclosure as a non-influencing filler is possible, however it is highly undesirable as the carcinogenic potential of cobalt containing powders makes the inclusion of more than 0.2 wt% cobalt (Co) as a filler undesirable for health and safety reasons. Most preferably, cobalt is present only as an unavoidable impurity. In the experiments reported herein, cobalt (Co) is essentially absent, i.e., below the analytical detection limit.

Aluminum (Al) was present in the raw materials up to 0.1 wt% based on the total mass of the iron-chromium based alloy of the present disclosure as an unavoidable impurity. Preferably raw materials having only 0.05 wt% aluminum as an unavoidable impurity were used for the present experiments, however in the experiments reported herein, aluminum (Al) is essentially absent, i.e., below the analytical detection limit.

Phosphor and sulfur as unavoidable impurities in the herein reported alloys were respectively detected at levels below 0.05 wt%.

Alloys that were atomized by one of either gas atomization (GA), water atomization (WA) or high-pressure water atomization (HPWA) contained up to 0.5 wt% oxygen (O) as an unavoidable impurity, and up to 0.15 wt% nitrogen (N) as an unavoidable impurity. Generally, the combined content of oxygen and nitrogen as unavoidable impurities did not exceed 0.3 wt% based on the total weight of the iron-chromium based alloys of the present disclosure, with combined contents of 0.25 wt%, 0.20 wt%, 0.15 wt%, or 0.10 wt% being obtainable.

Accordingly, in accordance with the embodiments of the present disclosure, the total content of unavoidable impurities shall not exceed 0.8 wt% based on the total weight of a present iron-chromium based alloy, but preferably does not exceed 0.75 wt%, 0.7 wt%, 0.65 wt%, 0.6 wt%, or 0.5 wt% based on the total weight of an iron-chrome based alloy according to the present disclosure. More preferably, only oxygen (O) and nitrogen (N) are present as unavoidable impurities in contents exceeding 0.05 wt%, wherein oxygen (O) should only be contained in a content up to 0.3 wt% as an unavoidable impurity, and nitrogen (N) only up to 0.15 wt% nitrogen (N) as an unavoidable impurity.

### Example 2 - Alloys on powder form examined in laser cladding.

The powdered alloys reported in Table 1 result from water atomizing a melt having the alloy composition as reported in the present table. Nitrogen and oxygen are impurity inclusions resulting from the water atomization process. With the exception of sample A11, which was high-pressure water atomized, and A41, which was gas atomized, all powders samples reported herein were manufactured by water atomization from melt. After atomizing the powders were dried and sieved to a size fraction of from between 20 µm to 63 µm, considered suitable in the subsequent laser cladding experiments. In the table, n.d. is not detected, while a * next to a sample number indicates that the sample is comparative to the alloys of the present invention.

Sample A35 is comparative, wherein a low chromium alloy was tested. The alloy performed unsatisfactorily with respect to the targets of the present disclosure e.g., as assessed by micro and/or macro cracks formation in accordance with the definitions given herein below. When the chromium content became lower than the herein detailed limits, macro cracks would start to form during laser cladding leading to a breakdown of the coating.

Overall, coatings with thicknesses between 100 to 350 µm were produced in laboratory scale using clad speeds between 30 and 100 m/min and deposition rates between 0.5 to 1.5 m²/h. The coatings of the present alloys as produced were free from cold cracks and showed a hardness between 400-450 HV; and a corrosion resistance in NSS >> 96h.

**Table 1 - Alloy compositions tested - Fe (bal)**

| **Smpl #** | **Cr** wt% | **Ni** wt% | **Si** wt% | **B** wt% | **Mo** wt% | **Mn** wt% | **C** wt% | **O** wt% | **N** wt% | **Nb** wt% |
|---|---|---|---|---|---|---|---|---|---|---|
| **A1** | 20.7 | 2.93 | 1.41 | 0.72 | 0.40 | 0.60 | 0.057 | 0.20 | 0.01 | - |
| **A2** | 25.0 | 3.00 | 2.10 | 0.73 | 0.40 | 0.66 | 0.059 | 0.12 | 0.01 | - |
| **A3** | 20.8 | 3.00 | 2.18 | 1.14 | 0.38 | 0.71 | 0.05 | 0.11 | 0.01 | - |
| **A4** | 25.0 | 2.90 | 1.55 | 1.05 | 0.40 | 0.72 | 0.06 | 0.27 | 0.02 | - |
| **A5** | 21.3 | 3.10 | 2.17 | 0.74 | 0.38 | 0.73 | 0.16 | 0.10 | 0.01 | - |
| **A6** | 24.8 | 2.80 | 1.50 | 0.68 | 0.40 | 0.64 | 0.17 | 0.21 | 0.01 | - |
| **A7** | 20.8 | 2.80 | 1.60 | 1.20 | 0.40 | 0.66 | 0.15 | 0.14 | 0.01 | - |
| **A8** | 25.2 | 2.80 | 2.30 | 1.20 | 0.27 | 0.69 | 0.15 | 0.10 | 0.02 | - |
| **A9** | 22.8 | 3.00 | 2.00 | 1.01 | 0.39 | 0.49 | 0.10 | 0.09 | 0.02 | - |
| **A10** | 22.8 | 3.50 | 1.60 | 1.00 | 0.40 | 0.60 | 0.10 | 0.24 | 0.04 | - |
| **A11** | 22.6 | 2.90 | 2.40 | 1.01 | 0.43 | 0.47 | 0.11 | 0.11 | 0.07 | - |
| **A12** | 22.7 | 3.12 | 2.39 | 1.01 | 0.41 | 0.53 | 0.08 | 0.13 | 0.13 | - |
| **A13** | 21.0 | 3.0 | 1.70 | 0.80 | 0.4 | 0.6 | 0.05 | 0.10 | n.d. | - |
| **A14** | 21.5 | 3.0 | 1.70 | 1.30 | 0.4 | 0.6 | 0.14 | 0.09 | n.d. | - |
| **A15** | 24.8 | 3.0 | 2.30 | 1.16 | 0.4 | 0.6 | 0.16 | 0.12 | n.d. | - |
| **A16** | 20.8 | 3.20 | 2.10 | 0.86 | 0.40 | 0.66 | 0.04 | 0.11 | 0.01 | - |
| **A17** | 24.7 | 3.20 | 2.40 | 0.88 | 0.40 | 0.56 | 0.07 | 0.10 | 0.02 | - |
| **A20** | 23.1 | 3.00 | 2.00 | 0.86 | 0.41 | 0.45 | 0.125 | 0.090 | 0.014 | - |
| **A21** | 23.2 | 3.10 | 2.00 | 0.72 | 0.39 | 0.46 | 0.075 | 0.090 | 0.015 | - |
| **A22** | 23.5 | 3.05 | 2.00 | 0.74 | 0.41 | 0.48 | 0.178 | 0.083 | 0.014 | - |
| **A23** | 23.7 | 3.03 | 2.03 | 1.04 | 0.42 | 0.49 | 0.075 | 0.091 | 0.012 | - |
| **A24** | 23.5 | 3.03 | 2.05 | 1.08 | 0.43 | 0.52 | 0.184 | 0.086 | 0.012 | - |
| **A25** | 22.9 | - | 1.90 | 0.88 | 0.42 | 0.58 | 0.119 | 0.129 | 0.012 | - |
| **A28** | 23.7 | 3.16 | 2.06 | 1.01 | 0.37 | 0.60 | 0.087 | 0.088 | 0.017 | - |
| **A35*** | 18.7 | 3.06 | 1.92 | 0.97 | 0.39 | 0.71 | 0.114 | 0.097 | 0.011 | - |
| **A36** | 24.9 | 3.10 | 1.95 | 1.04 | 0.38 | 0.57 | 0.110 | 0.093 | 0.014 | - |
| **A38** | 23.2 | 2.90 | 2.20 | 1.03 | 1.50 | 0.73 | 0.021 | - | - | - |
| **A39** | 23.4 | 3.00 | 2.2 | 0.38 | 0.71 | 1.01 | 0.020 | 0.072 | 0.008 | - |
| **A40** | 23.3 | 3.00 | 1.9 | 1.02 | 1.6 | 0.62 | 0.099 | 0.092 | 0.026 | - |
| **A41** | 23.1 | 3.00 | 2.00 | 1.00 | 0.40 | 0.66 | 0.107 | 0.041 | 0.037 | - |
| **A42** | 25.2 | 2.90 | 1.06 | 1.06 | 0.39 | 0.57 | 0.109 | 0.106 | 0.023 | - |
| **A43** | 27.1 | 2.90 | 1.05 | 1.05 | 0.40 | 0.57 | 0.101 | 0.109 | 0.023 | - |
| **A44** | 22.95 | 4.68 | 0.94 | 0.94 | 0.46 | 0.62 | 0.090 | - | - | - |

### Example 3 - Alloys on powder form containing niobium examined in laser cladding.

The powdered alloys reported in Table 2 result from water atomizing a melt having the alloy composition as reported in the present table. Nitrogen and oxygen are impurity inclusions resulting from the water atomization process. All powders samples reported herein were manufactured by water atomization from melt. After atomizing the powders were dried and sieved to a size fraction of from between 20 µm to 63 µm, considered suitable in the subsequent laser cladding experiments. In the table, n.d. is not detected, while a * next to a sample number indicates that the sample is comparative to the alloys of the present invention.

For the alloys of the present invention reported in Example 2 in laser cladding experiments, it was found that although the alloys would perform to specification in general, when one or both of either carbon or boron exceeded 0.15 wt% (C) or 1.1 wt% (B) respectively, or both in combination exceeded 1.2 wt%, the number macro or solidification cracks formed during laser cladding increased compared to other alloys of the present invention.

In subsequent experiments for the alloys as reported in Table 2, it was found that niobium (Nb) was suitable for suppressing crack formation, such as cracks visible to the eye, in high content (i.e., exceeding the above given contents' limits) carbon and/or boron alloys while being a neutral additive for other concentrations of carbon, respectively boron, or both carbon and boron in combination.

**Table 2 - Alloy compositions tested with Niobium - Fe (bal)**

| **Smpl #** | **Cr** wt% | **Ni** wt% | **Si** wt% | **B** wt% | **Mo** wt% | **Mn** wt% | **C** wt% | **O** wt% | **N** wt% | **Nb** wt% |
|---|---|---|---|---|---|---|---|---|---|---|
| **A26** | 23.2 | 3.06 | 2.02 | 1.15 | 0.36 | 0.57 | 0.162 | 0.104 | 0.013 | 0.52 |
| **A27** | 23.4 | 3.06 | 2.02 | 1.17 | 0.37 | 0.59 | 0.163 | 0.087 | 0.013 | 1.00 |
| **A29** | 23.7 | 3.00 | 2.00 | 0.98 | 0.46 | 0.58 | 0.110 | 0.094 | 0.013 | 0.49 |
| **A30** | 23.5 | 3.00 | 2.00 | 0.73 | 0.44 | 0.58 | 0.118 | 0.117 | 0.014 | 0.48 |
| **A31** | 22.9 | 2.88 | 2.04 | 1.30 | 0.44 | 0.62 | 0.174 | 0.076 | 0.012 | 0.49 |
| **A32** | 23.4 | 2.83 | 1.89 | 1.33 | 0.39 | 0.56 | 0.175 | 0.077 | 0.012 | 0.94 |
| **A33** | 23.0 | 3.00 | 1.90 | 1.10 | 0.40 | 0.60 | 0.103 | 0.097 | 0.014 | 0.90 |
| **A34** | 23.0 | 3.00 | 2.00 | 0.90 | 0.40 | 0.60 | 0.085 | 0.078 | 0.015 | 1.00 |

### CLOSING COMMENTS

Although the present invention has been described in detail for purpose of illustration, it is understood that such detail is solely for that purpose, and variations can be made therein by those skilled in the art in practicing the claimed subject matter, from a study of the drawings, the disclosure, and the appended claims.

The term "comprising" when used in the claims does not exclude other elements or steps. The indefinite article "a" or "an" as used in the claims does not exclude a plurality. A reference sign used in a claim shall not be construed as limiting the scope.

## Claims

1. An iron-chromium based alloy consisting of by weight of total weight of alloy:
| | |
|---|---|
| Chromium (Cr) | : 20.5 wt% - 28.0 wt%, |
| Nickel (Ni) | : up to 5.0 wt%, |
| Silicon (Si) | : 0.5 wt% - 2.5 wt%, |
| Boron (B) | : 0.5 wt% - 1.5 wt%, |
| Molybdenum (Mo) | : 0.15 wt% - 2.0 wt%, |
| Manganese (Mn) | : 0.10 wt% - 0.90 wt%, |
| Carbon (C) | : up to 0.20 wt%, |
| Niobium (Nb) | : up to 1.5 wt%, |
| Copper (Cu) | : up to 0.2 wt%, |
| Cobalt (Co) | : up to 1.0 wt%, |
the balance being iron (Fe) and unavoidable impurities not exceeding 0.8 wt%.

2. An iron-chromium based alloy according to claim 1, wherein copper (Cu) is present up to 0.1 wt%, preferably wherein copper is present as an unavoidable impurity.

3. An iron-chromium based alloy according to any preceding claim, wherein cobalt (Co) is present up to 0.2 wt%, preferably up to 0.1 wt%, more preferably wherein cobalt is present as an unavoidable impurity.

4. An iron-chromium based alloy according to any preceding claim, wherein niobium (Nb) is present from 0.30 wt%, from 0.35 wt%, from 0.40 wt%, from 0.45 wt%, from 0.5 wt%, from 0.55 wt%, from 0.60 wt%, from 0.70 wt%, from 0.8 wt%, from 0.9 wt%, or from 1.0 wt%; and to 1.4 wt%, to 1.3 wt%, to 1.2 wt%, to 1.1 wt%, to 1.0 wt%, to 0.9 wt%, or to 0.8 wt%, preferably from 0.40 to 1.2 wt%, from 0.45 wt% to 1.1 wt% or from 0.50 wt% to 1.0 wt%.

5. An iron-chromium based alloy according to any preceding claim, wherein if one of either the content of carbon (C) exceeds 0.15 wt%, the content of boron (B) exceeds 1.1 wt%, or the combined content of carbon and boron exceeds 1.20 wt%, niobium (Nb) is present from 0.30 wt% to 1.5 wt%, preferably from 0.5 wt% to 1 wt%.

6. An iron-chromium based alloy according to any preceding claim, wherein chromium (Cr) is present from 21 wt% to 26 wt%, from 22 wt% to 25 wt%, from 22.5 wt% to 24.5 wt%, or preferably from 23 wt% to 24 wt%.

7. An iron-chromium based alloy according to any preceding claim, wherein nickel (Ni) is present from 2.15 wt% to 3.85 wt%, from 2.25 wt% to 3.75 wt%, from 2.35 wt% to 3.65 wt%, from 2.50 wt% to 3.50 wt%, from 2.65 wt% to 3.35 wt%, or preferably from 2.75 wt% to 3.25 wt%.

8. An iron-chromium based alloy according to any preceding claim, wherein silicon (Si) is present from 0.75 wt% to 2.45 wt%, from 1.0 wt% to 2.4 wt%, from 1.25 wt% to 2.35 wt%, from 1.5 wt% to 2.3 wt%, from 1.6 wt% to 2.25 wt%, preferably from 1.7 wt% to 2.2 wt%, from 1.8 wt% to 2.15 wt%, or more preferably from 1.9 wt% to 2.1 wt%.

9. An iron-chromium based alloy according to any preceding claim, wherein boron (B) is present from 0.7 wt% to 1.3 wt%, from 0.8 wt% to 1.2 wt%, from 0.9 wt% to 1.1 wt%, or preferably from 0.95 wt% to 1.05 wt%.

10. An iron-chromium based alloy according to any preceding claim, wherein molybdenum (Mo) is present up to 1.9 wt%, up to 1.8 wt%, up to 1.7 wt%, up to 1.6 wt%, up to 1.5 wt%, up to 1.4 wt%, up to 1.3 wt%, up to 1.2 wt%, up to 1.1 wt%, up to 1.0 wt%, up to 0.90 wt%, up to 0.80 wt%, preferably up to 0.70 wt%, up to 0.60 wt%, up, or more preferably up to 0.50 wt%.

11. An iron-chromium based alloy according to any preceding claim, wherein molybdenum (Mo) is present from 0.20 wt%, from 0.25 wt%, from 0.30 wt%, from 0.35 wt%, from 0.40 wt%, from 0.45 wt%, from 0.50 wt%, from 0.55 wt%, from 0.60 wt%, from 0.65 wt% or from 0.70 wt%.

12. An iron-chromium based alloy according to any preceding claim, wherein molybdenum (Mo) is present from 0.20 wt% to 1.3 wt%, from 0.25 wt% to 1.1 wt%, from 0.3 wt% to 0.90 wt%, from 0.35 wt% to 0.70 wt%, or from 0.40 wt% to 0.60 wt%.

13. An iron-chromium based alloy according to any preceding claim, wherein manganese (Mn) is present from 0.35 wt%, from 0.40 wt%, from 0.45 wt%, or from 0.50 wt%; and to 0.85 wt%, to 0.80 wt%, to 0.75 wt%, to 0.70 wt%, to 0.65 wt%, to 0.60 wt%, to 0.55 wt% or to 0.50 wt%; preferably from 0.30 wt% to 0.70 wt% or from 0.40 wt% to 0.60 wt%.

14. An iron-chromium based alloy according to any preceding claim, wherein carbon is present from 0.01 wt% to 0.20 wt%, preferably carbon (C) is present from 0.02 wt%, from 0.03 wt%, from 0.04 wt%, from 0.05 wt%, from 0.06 wt%, from 0.07 wt%, from 0.08 wt%, from 0.09 wt%, from 0.10 wt%; and to 0.19 wt%, to 0.18 wt%, to 0.17 wt%, to 0.15 wt%, to 0.14 wt%, to 0.13 wt%, to 0.12 wt%, to 0.11 wt% or to 0.10 wt%; preferably from 0.05 wt% to 0.15 wt%.

15. An iron-chromium based alloy according to any of the preceding claims 1 to 14 on powder form.

16. An iron-chromium based alloy on powder form according to claim 15, wherein oxygen (O) as an unavoidable impurity does not exceed 0.6 wt% by weight of total weight of alloyed powder.
